# EUROPÄISCHE PATENTSCHRIFT

(11) **EP 0 846 039 B1**
(45) Veröffentlichungstag und Bekanntmachung des Hinweises auf die Patenterteilung: **28.02.2001**
(21) Anmeldenummer: 96929297.8
(22) Anmeldetag: 21.08.1996
(51) Int. Cl.: B23K 1/00

(54) **VERFAHREN ZUM HERSTELLEN EINES GELÖTETEN WABENKÖRPERS UNTER VERWENDUNG SCHICHTARTIG AUFGEBAUTER BLECHE**
PROCESS FOR MANUFACTURING A SOLDERED HONEYCOMBED BODY BY USING STRATIFIED SHEET METAL
PROCEDE DE FABRICATION D'UN CORPS A NIDS D'ABEILLES SOUDE FAISANT INTERVENIR DES TOLES DE CONSTRUCTION LAMELLAIRE

(30) Priorität: 22.08.1995 DE 19530871
(43) Veröffentlichungstag der Anmeldung: 10.06.1998
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE); WIERES, Ludwig, D-51491 Overath (DE)
(74) Vertreter: Kahlhöfer, Hermann, Dipl.-Phys.
(86) Internationale Anmeldenummer: EP9603676
(87) Internationale Veröffentlichungsnummer: WO9707923

(56) Entgegenhaltungen:
- EP-A- 0 514 138
- WO-A-89/07488
- DE-A- 2 947 694
- DE-A- 3 440 498
- DE-A- 3 724 005
- US-A- 3 605 255
- US-A- 3 769 101
- US-A- 4 602 001
- US-A- 5 366 139

## Beschreibung

Die Erfindung bezieht sich auf ein Verfahren zum Herstellen eines Wabenkörpers, bei dem Metallbleche lagenweise geschichtet und/oder gewickelt werden, die zumindest teilweise eine Struktur zur Bildung von für ein Fluid durchströmbaren Kanälen aufweisen.

Ein Wabenkörper der vorstehend genannten Art ist beispielsweise durch die WO 89/07488 bekannt. Der Wabenkörper dient als Träger eines Katalysators, der die Umsetzung von Komponenten eines Abgases, insbesondere eines Abgases aus einem Verbrennungsmotor, in weniger umweltbelastende Verbindungen begünstigt. Die Wabenkörper sind hohen mechanischen und thermischen Belastungen ausgesetzt. Neben den mechanischen und thermischen Belastungen sind die Metallbleche einer die Korrosion fördernden Atmosphäre ausgesetzt. Es ist daher wünschenswert, zur Herstellung eines Wabenkörpers Metallbleche mit hoher Korrosionsbeständigkeit zu verwenden.

Durch die US 5,366,139 ist es bekannt, für Wabenkörper Metallbleche zu verwenden, die zunächst aus einem geschichteten Material bestehen. Solche Bleche weisen mindestens eine Schicht aus Chrom enthaltendem Stahl und mindestens eine im wesentlichen Aluminium enthaltende Schicht auf. Ein solches geschichtetes Blech wird einer Wärmebehandlung unterzogen, wobei das Blech weitgehend homogenisiert wird. Unter Homogenisierung des Bleches wird eine Diffusion des Aluminiums in den Stahl verstanden, so daß im wesentlichen ein einschichtiges Blech aus Stahl mit Aluminium entsteht. Durch die US 5,366,139 ist es bekannt, die Wärmebehandlung zunächst unter Vakuum oder unter reduzierender und abschließend unter oxidierender Atmosphäre durchzuführen. Durch die Behandlung des Blechs in oxidierender Atmosphäre bildet sich auf dem Blech eine Oxidhaut, welche insbesondere als Haftschicht für einen später aufzubringenden Washcoat dient. Die Herstellung solcher Bleche ist relativ kostenintensiv, da die Bleche zur Homogenisierung einer Wärmebehandlung unterzogen werden müssen.

In der US-A-4 602 001 wird bereits ein Verfahren nach Oberbegriff des Anspruchs 1 zur Herstellung eines hochtemperaturfesten Abgaskatalysator-Trägerkörpers aus Stahlblech beschrieben, bei dem mit Aluminium beschichtete Stahlbleche fügetechnisch zu einem Wabenkörper verbunden werden. Einzelheiten über die Verwendung besonders geeigneter Lote zur Herstellung solcher fügetechnischer Verbindungen sind in dieser Schrift nicht enthalten.

Der vorliegenden Erfindung liegt die Aufgabe zugrunde, ein Verfahren zum Herstellen eines Wabenkörpers anzugeben, der kostengünstig herstellbar, aber sehr korrosionsbeständig und mechanisch belastbar ist.

Diese Aufgabe wird durch ein Verfahren zum Herstellen eines Wabenkörpers mit den Merkmalen des Anspruchs 1 gelöst. Vorteilhafte Weiterbildungen sind Gegenstand der Unteransprüche.

Gemäß dem erfindungsgemäßen Verfahren zum Herstellen eines Wabenkörpers wird vorgeschlagen, die Wärmebehandlung des geschichtet aufgebauten Blechs als einen Teil eines Lötprozesses durchzuführen, bei dem die Berührungsstellen zwischen den Blechlagen zumindest teilweise untereinander verlötet werden. Durch das erfindungsgemäße Verfahren werden die Kosten der Herstellung eines Wabenkörpers verringert, da eine vorhergehende Wärmebehandlung zur weitgehenden Homogenisierung des geschichteten Materials entfällt und diese Homogenisierung durch die zur Durchführung des Lötprozesses notwendige Wärmezufuhr zu den Blechlagen erfolgt. Somit wird in einem einzigen Wärmebehandlungsvorgang bei der Herstellung des Wabenkörpers eine Homogenisierung der Blechlagen aus einem geschichteten Material erreicht. Ferner wird mit dem Wärmebehandlungsschritt die Ausbildung einer Oxidschicht auf den Blechlagen erreicht, die als Haftschicht für einen Washcoat dient, und zum anderen der Lötprozeß als solcher durchgeführt. Dabei enthält das Lotmaterial zwischen 0,5 und 8 % Bor, insbesondere 3 bis 6 % Bor. Bor im Lotmaterial dient als Diffusionsbeschleuniger, so daß eine zeitliche Verkürzung des Lötprozesses bei gleichwertigen Lötverbindungen erreicht wird. Eine Verkürzung des Lötprozesses hat zur Folge, daß höhere Durchlaufraten durch einen Lötofen ermöglicht werden. Außerdem bewirkt das Bor ein besseres Benetzungsverhalten des Lotes und damit qualitativ hochwertige Lötverbindungen.

Vorzugsweise wird die Wärmebehandlung zunächst unter Vakuum oder unter reduzierender Atmosphäre durchgeführt, wobei nach Erreichen einer Maximaltemperatur während der Abkühlphase eine Atmosphäre mit einem geringen Sauerstoffpartialdruck, insbesondere einem Sauerstoffpartialdruck von weniger als 1 Torr eingestellt wird. Eine solche Verfahrensführung hat den Vorteil, daß auf den Metallblechen eine Aluminiumoxidschicht entsteht, welche besonders als Haftgrund für einen Washcoat geeignet ist.

Durch die Verfahrensführung und die Verwendung eines geschichteten Materials, welches mindestens eine Schicht aus Chrom enthaltendem Stahl und mindestens eine im wesentlichen Aluminium enthaltende Schicht aufweist, kann das Lotmaterial ein Nickelbasislot sein, wobei die maximale Löttemperatur bei 1100 bis 1150 °C beträgt.

Insbesondere ist es vorteilhaft, daß die Wärmebehandlung zunächst in einem Temperaturbereich durchgeführt wird, in dem das Lotmaterial noch nicht schmilzt. Nach einer weitgehenden Homogenisierung der geschichteten Bleche wird die Temperatur bis zu der Schmelztemperatur des Lotmaterials erhöht. Diese Verfahrensführung hat den Vorteil, daß sichergestellt wird, daß eine weitgehende Homogenisierung der geschichteten Bleche erreicht und dann eine haltbare Lötverbindung geschaffen wird.

Weitere Vorteile und Merkmale des erfindungsgemäßen Verfahrens werden anhand eines nach dem Verfahren hergestellten Wabenkörpers erläutert. Es zeigen:
- Fig. 1: schematisch einen Wabenkörper in der Vorderansicht gemäß Stand der Technik,
- Fig. 2: eine Metallblechlage mit geschichtetem Aufbau gemäß Stand der Technik,
- Fig. 3: eine Berührungsstelle zwischen einer Metallblechlage mit einem geschichteten Aufbau und einer Metallblechlage aus einem im wesentlichen homogenen Stahl während einer Homogenisierung,
- Fig. 4: die Berührungsstelle nach Fig. 3 nach der Wärmebehandlung und
- Fig. 5: schematisch ein Temperatur-Zeit-Diagramm.

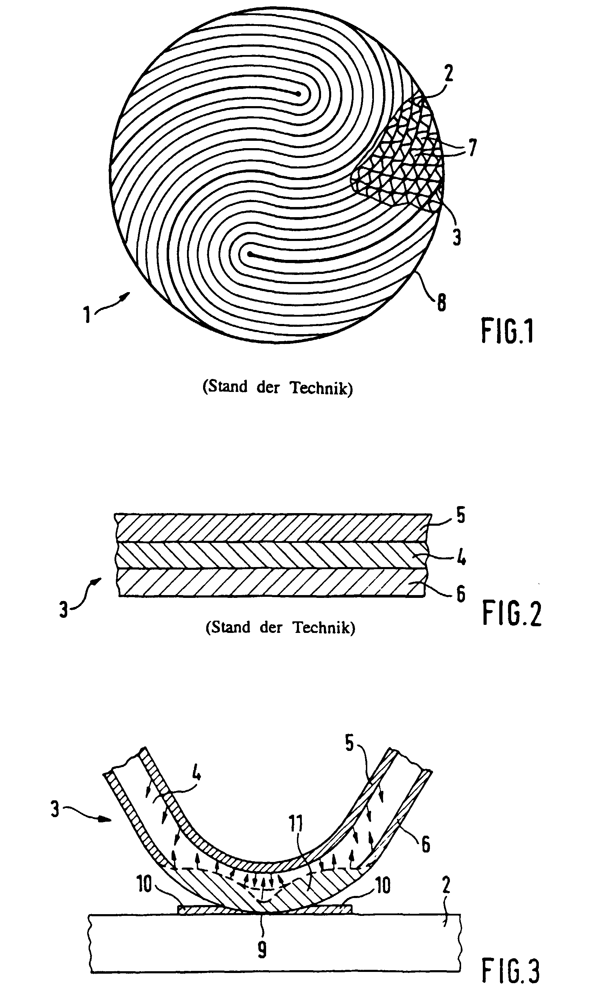

In der Fig. 1 ist ein Wabenkörper 1 dargestellt. Der Wabenkörper 1 besteht aus lageweise geschichteten und gewickelten hochtemperaturkorrosionsbeständigen Metallblechlagen. Der Wabenkörper 1 ist aus abwechselnden Lagen glatter und gewellter Bleche 2, 3 hergestellt. Die glatten Bleche 2 bestehen aus einem im wesentlichen homogenen zumindest Chrom und Aluminium enthaltenden Stahl. Die gewellten Bleche 3 weisen einen geschichteten Aufbau auf. Die geschichteten Bleche 3 enthalten eine innere Schicht 4 aus einem Chrom enthaltenden Stahl. Auf den beiden Seiten der inneren Schicht 4 sind jeweils Schichten 5, 6 aufgebracht, die im wesentlichen aus Aluminium bestehen, wie dies aus der Fig. 2 ersichtlich ist. Die in der Fig. 2 dargestellte Metallblechlage mit geschichtetem Aufbau weist eine Erscheinungsform auf, wie sie vor der Wärmebehandlung ist. Der aus lagenweise geschichteten und gewickelten Metallblechen herstellte Wabenkörper 1 weist eine Struktur auf zur Bildung von für ein Fluid durchströmbaren Kanälen 7 auf. Die Blechlagen sind in einem Mantelrohr 8 angeordnet. Das Mantelrohr 8 weist vorzugsweise auf seiner Innenseite zumindest in Teilbereichen eine im wesentlichen aus Aluminium bestehende Schicht auf. Es kann aber auch allein oder zusätzlich mit üblichen Löttechniken mit den Blechen verbunden werden.

In der Fig. 3 ist eine Berührungsstelle eines glatten Blechs 2 mit einem gewellten Blech 3 dargestellt. Das gewellte Blech 3 weist einen geschichteten Aufbau auf. Zwischen dem gewellten Blech 3 und dem glatten Blech 2 ist im Umgebungsbereich der Berührungsstelle 9 eine Loteinlage 10 eingebracht. Die Fig. 3 zeigt eine Momentaufnahme während eines Wärmebehandlungsabschnittes, in dem der geschichtete Aufbau des Blechs 3 homogenisiert wird. Während des Wärmebehandlungsschritts diffundiert Aluminium, welches in den Schichten 5 und 6 enthalten ist in die innere Schicht 4. Die Diffusionsrichtung des Aluminiums ist mit Pfeilen angedeutet. Im unteren Biegeabschnitt des gewellten Blechs 3 hat sich bereits eine fast homogenisierte Zone 11 ausgebildet. Die Homogenisierungstemperatur liegt unterhalb der Schmelztemperatur der Loteinlage 10.

Nachdem der Homogenisierungsvorgang abgeschlossen wurde, wird die Temperatur des Wabenkörpers bis zu einer Löttemperatur erhöht, bei der die Loteinlage 10 in einen flüssigen Zustand übergeht. Das geschmolzene Lot bildet zwischen dem gewellten Blech 3 und dem glatten Blech 2 beidseits der Berührungsstelle 9 einen Miniskus 13.

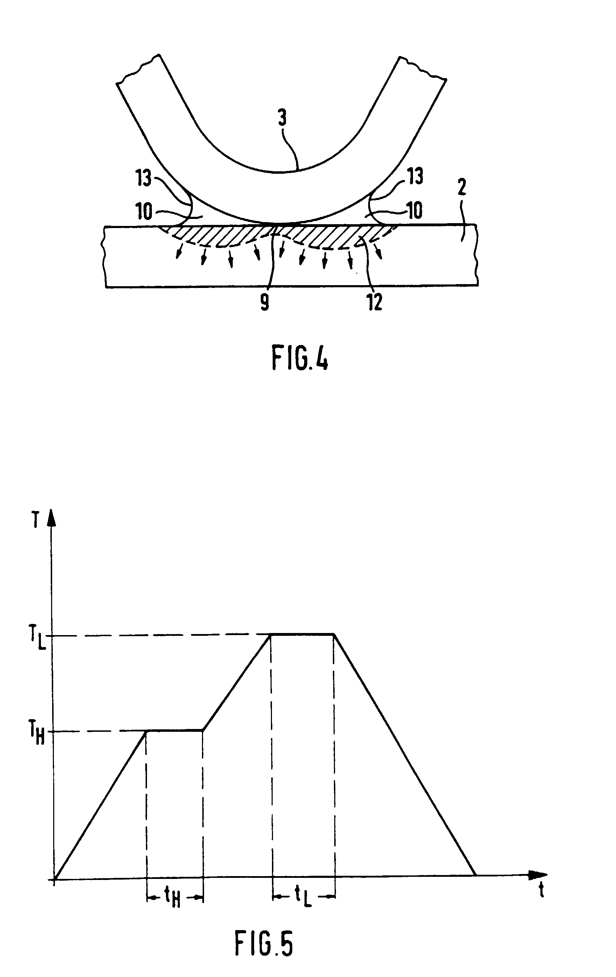

Während des Wärmebehandlungsschrittes kann an Stellen, an denen sich kein Lot befindet, ein Teil des Aluminiums, das die Schicht 6 bildet, in das glatte Blech 2 hinein diffundieren. Aluminium-Stahl-Legierungen haben einen wesentlich geringeren Schmelzpunkt als Stahl, so daß sich die innere Schicht 4 des gewellten Blechs und das glatte Blech 2 vorübergehend verflüssigen und eine innige Verbindung im Umgebungsbereich der Berührungsstelle 9 entsteht, die die durch Löten an anderen Stellen entstehenden Verbindungen ergänzt. Mit 12 ist ein aluminiumhaltiger Bereich des glatten Blechs 2 bezeichnet. Aufgrund des Konzentrationsgradienten wandert das Aluminium wie durch die Pfeile in der Fig. 4 angedeutet weiter in das Blech 2 hinein, wodurch wieder eine Verarmung des Aluminiumgehaltes in dem Bereich 12 eintritt und dadurch der Schmelzpunkt des Bereichs 12 sich erhöht, so daß die Verbindungsstelle erstarrt.

In der Fig. 5 ist schematisch ein Temperatur-Zeit-Diagramm dargestellt. Der Wabenkörper wird beispielsweise in einem Vakuumlötofen bis zu einer Homogenisierungstemperatur T_{H} erwärmt. Der Wabenkörper wird auf der Homogenisierungstemperatur für eine Zeit t_{H} gehalten, bis eine vollständige Homogenisierung der Blechlagen mit geschichtetem Aufbau eingetreten ist. Die Homogenisierungstemperatur T_{H} liegt unterhalb der Löttemperatur T_{L}. Nachdem die Homogenisierung der geschichtet aufgebauten Blechlagen eingetreten ist, wird die Temperatur innerhalb des Ofens bis zur Löttemperatur T_{L} erhöht. Die Löttemperatur kann bei etwa 1150 °C liegen. Um eine vollständige Durchlötung des Wabenkörpers zu erzielen, wird der Ofen für eine Zeit t_{L} auf der Löttemperatur gehalten. An den Lötvorgang schließt sich ein Abkühlvorgang an, wobei in die Atmosphäre des Ofens vorzugsweise ganz geringe Mengen an Sauerstoff eingeleitet werden und der Sauerstoffpartialdruck innerhalb des Ofens weniger als 1 Torr beträgt. Während der Abkühlphase des Wabenkörpers bildet sich dadurch auf den Blechen 2, 3 eine Aluminiumoxidhaut aus, welche als Haftgrund für einen Washcoat dienen kann.

Der in der Fig. 5 dargestellte Verlauf der Temperatur über der Zeit ist beispielhaft. Es ist auch möglich, daß bei entsprechender Ausgestaltung der Wabenkörper und des Ofens die Homogenisierung bereits vollständig bis zur Erreichung der Löttemperatur erfolgt ist, ohne daß der Ofen für eine bestimmte Zeit auf einer vorgegebenen Homogenisierungstemperatur T_{H} gehalten werden muß.

Das erfindungsgemäße Verfahren ist für Wabenkörper anwendbar, die ganz oder teilweise aus schichtartig aufgebauten Blechen bestehen und führt kostengünstig zu mechanisch belastbaren hochtemperaturkorrosionsbeständigen Körpern, die besonders für Abgaskatalysatoren von Kraftfahrzeugen geeignet sind.

### Bezugszeichenliste:

- 1: Wabenkörper
- 2: glattes Blech
- 3: gewelltes Blech
- 4: innere Schicht
- 5, 6: Aluminiumschicht
- 7: Kanal
- 8: Mantelrohr
- 9: Berührungsstelle
- 10: Loteinlage
- 11: Diffusionszone
- 12: Bereich
- 13: Miniskus

## Patentansprüche

1. Verfahren zum Herstellen eines Wabenkörpers (1), bei dem Metallbleche (2, 3) lagenweise geschichtet und/oder gewickelt werden, die zumindest teilweise eine Struktur zur Bildung von für ein Fluid durchströmbaren Kanälen (7) aufweisen, wobei zumindest ein Teil der Blechlagen (3) zunächst aus einem geschichteten Material besteht, welches mindestens eine Schicht aus Chrom enthaltendem Stahl (4) und mindestens eine im wesentlichen Aluminium enthaltende Schicht (5, 6) aufweist, die bei einer späteren Wärmebehandlung weitgehend homogenisiert werden, wobei weiter die Wärmebehandlung zunächst unter Vakuum oder unter reduzierender und anschließend unter oxidierender Atmosphäre stattfindet, und wobei die Wärmebehandlung Teil eines Lötprozesses ist, bei dem die Berührungsstellen (9) zwischen den Blechlagen (2, 3) mit einem Lotmaterial (10) auf Nickelbasis, zumindest teilweise untereinander verlötet werden dadurch gekennzeichnet, daß das Lotmeterial zwischen 0,5 und 8 Gew. % Bor enthält, vorzugsweise etwa 3 bis 6 Gew. %.

2. Verfahren nach Anspruch 1, dadurch gekennzeichnet, daß nach Erreichen einer Maximaltemperatur während der Abkühlungsphase eine Atmosphäre mit einem ganz geringen Sauerstoffpartialdruck, insbesondere einem Sauerstoffpartialdruck von weniger als 1 torr eingestellt wird.

3. Verfahren nach einem der Ansprüche 1 oder 2, dadurch gekennzeichnet, daß die maximale Löttemperatur etwa 1100 bis 1150 °C beträgt.

4. Verfahren nach einem der vorhergehenden Ansprüche, dadurch gekennzeichnet, daß die Wärmebehandlung zunächst in einem Temperaturbereich durchgeführt wird, bei dem das Aluminium in den Stahl diffundiert, das Lotmaterial (10) aber noch nicht schmilzt, und nach weitgehender Homogenisierung der geschichteten Bleche (3) die Temperatur erst auf Löttemperatur (T_{I}) erhöht wird.

## Claims

1. A process for the production of a honeycomb body (1) in which metal sheets (2, 3) which at least partially have a structure for forming passages (7) through which a fluid can flow are stacked and/or wound in a layer-wise fashion, wherein at least a portion of the sheet layers (3) initially comprises a layered material which has at least one layer of chromium-bearing steel (4) and at least one substantially aluminium-bearing layer (S, 6), which are substantially homogenized in a later heat treatment, wherein moreover the heat treatment is effected initially under vacuum or in a reducing and then in an oxidizing atmosphere, and wherein the heat treatment is part of a brazing procedure in which the contact locations (9) between the sheet layers (2, 3) are at least partially brazed together with a brazing material (10) on a nickel basis, characterised in that the brazing material contains between 0.5 and 8 % by weight of boron and preferably between about 3 and 6 % by weight.

2. A process as set forth in claim 1 characterised in that after the attainment of a maximum temperature during the cooling phase an atmosphere with a quite low oxygen partial pressure and in particular an oxygen partial pressure of less than 1 Torr is used.

3. A process as set forth in one of claims 1 and 2 characterised in that the maximum brazing temperature is between about 1100 and 1150°C.

4. A process as set forth in one of the preceding claims characterised in that the heat treatment is firstly effected in a temperature range in which the aluminium diffuses into the steel but the brazing material (10) does not yet melt and the temperature is only raised to the brazing temperature (T_{L}) after substantial homogenization of the layered sheets (3).

## Revendications

1. Procédé destiné à la fabrication d'un corps en nids d'abeilles (1) dans lequel des tôles métalliques (2, 3) sont stratifiées et/ou enroulées par couches qui présentent au moins partiellement une structure pour la formation de canaux (7) pouvant être traversés par un fluide, une partie au moins des couches de tôles (3) étant composée d'un matériau stratifié qui comporte au moins une couche d'acier (4) contenant du chrome et au moins une couche (5, 6) contenant sensiblement de l'aluminium, qui lors d'un traitement thermique effectué plus tard sont largement homogénéisées, le traitement thermique en outre étant d'abord effectué sous vide ou sous une atmosphère réductrice et ensuite sous une atmosphère oxydante et le traitement thermique faisant partie d'un processus de brasage, dans lequel les zones de contact (9) entre les couches de tôles (2, 3) sont au moins partiellement brasés entre eux avec un matériau de brasage (10) à base de nickel, caractérisé en ce que le matériau de brasage comporte entre 0,5 et 8 % en poids de bore, de préférence 3 à 6 % en poids.

2. Procédé selon la revendication 1, caractérisé en ce qu'après une température maximale a été atteinte une atmosphère à pression partielle de l'oxygène très faible, notamment une pression partielle de l'oxygène de moins de 1 torr, est réglée durant la phase de refroidissement.

3. Procédé selon l'une des revendications 1 ou 2, caractérisé en ce que la température maximale de brasage comporte environ 1100 à 1150 °C.

4. Procédé selon l'une des revendications précédentes, caractérisé en ce que le traitement thermique est d'abord effectué dans un écart de température, où l'aluminium diffuse dans l'acier, mais où le matériau de brasage (10) ne fond pas encore et où après une homogénéisation notable des tôles stratifiées (3) la température est d'abord augmentée jusqu'à la température de brasage (T_{L}).
